Europäisches Patentamt

European Patent Office

Office européen des brevets

(19)

(11) Veröffentlichungsnummer: **0 124 477**
**B1**

(12) **EUROPÄISCHE PATENTSCHRIFT**

(45) Veröffentlichungstag der Patentschrift:
03.06.87

(51) Int. Cl.⁴: **F 16 K 31/05**

(21) Anmeldenummer: **84810123.4**

(22) Anmeldetag: **19.03.84**

(54) Stellantrieb für Absperr- und Regulierarmaturen.

(30) Priorität: **21.03.83 CH 1535/83**

(43) Veröffentlichungstag der Anmeldung:
**07.11.84 Patentblatt 84/45**

(45) Bekanntmachung des Hinweises auf die Patenterteilung:
**03.06.87 Patentblatt 87/23**

(84) Benannte Vertragsstaaten:
**AT CH DE FR LI SE**

(56) Entgegenhaltungen:
**CH - A - 272 054**
**DE - B - 1 550 145**
**DE - B - 1 946 043**
**DE - B - 2 242 429**
**FR - A - 1 383 538**
**GB - A - 788 007**
**US - A - 3 647 038**

(73) Patentinhaber: **TEM AG für Elektronik, Triststrasse 8,
CH-7000 Chur (CH)**

(72) Erfinder: **Letta, Nicolo, Falknisstrasse 21, CH-7000 Chur
(CH)**

(74) Vertreter: **Schmauder, Klaus Dieter et al, c/o Schmauder
& Wann Patentanwaltsbüro Nidelbadstrasse 75,
CH-8038 Zürich (CH)**

ACTORUM AG

## Beschreibung

Die Erfindung betrifft einen Stellantrieb für Absperr- und Regulierarmaturen, insbesondere für Ventile und Hähne, gemäss Oberbegriff des Anspruches 1.

Ein Stellantrieb der eingangs genannten Art ist beispielsweise aus der DE-B 22 42 429 oder der US-A 3 647 038 bekannt. Dabei findet die Abstützung des Zahnrades zu beiden Seiten über metallische Federelemente statt, die als Tellerfedern bzw. Federbügel ausgebildet sind. Tellerfedern bzw. Federelemente der angesprochenen Art haben den Nachteil, dass sie einerseits keine über den erforderlichen Stellbereich gradlinige Federkenncharakteristik (Federkennlinie) aufweisen und im übrigen diese Federkenncharakteristik relativ flach verläuft. Dadurch ist einerseits ein grosser Stellweg erforderlich und andererseits ergeben sich erheblich Streuungen des Ansprechbereiches. Um diese Unzulänglichkeiten zu vermeiden, werden bei dem geschilderten Stand der Technik Kupplungselemente verwendet, die durch die achsiale Verschiebung des Antriebszahnrades zur Mitnahme angeregt werden. Diese Kupplungselemente betätigen Schaltglieder, die dann über ein Schaltgestänge die Schalter auslösen. Die bekannten Überlastsicherungen weisen demnach einen sehr komplizierten Aufbau auf und sind somit nicht nur relativ aufwendig und teuer, sondern benötigen auch einen erheblichen Raumbedarf, wodurch sich eine Miniaturisierung des Stellantriebes nicht verwirklichen lässt.

Aufgabe der Erfindung ist es, einen Stellantrieb für eine Absperr- und Regulierarmatur zu schaffen, der bei äusserst einfachem Aufbau einen geringen Platzbedarf und hohe Betriebssicherheit aufweist, sodass er in «Miniaturbauweise» hergestellt werden kann.

Es hat sich in überraschender Weise herausgestellt, dass die Verwendung von O-Ringen als Federelemente eine sehr steile Federkennlinie ergeben, die überdies in dem für den Schaltweg erforderlichen Kraftbereich exakt linear verläuft. Dadurch ist es möglich, ohne zusätzliche Hilfsmittel die achsiale Bewegung des Antriebszahnrades für Schaltzwecke auszunutzen, sodass mit einem Minimum an Bauteilen und einem Minimum an Schaltweg eine exakt arbeitende Überlastsicherung für einen Stellantrieb für Absperr- und Regulierarmaturen erzielt wird, sodass ein solcher Stellantrieb sehr klein gebaut werden kann.

Der Stellantrieb kann für Absperr-, Drossel-, Umlenk-, Misch- und Mengenregulierventile oder Hähne, z.B. Mischhähne, vorzugsweise leicht drehende Mischhähne, verwendet werden, die für Gase oder Flüssigkeiten eingesetzt werden können. In vorteilhafter Weise kann für den Stellantrieb ein Motor mit starker Leistung verwendet werden, da das Abschalten in jeder Lage bei Auftreten einer Gegenkraft erfolgt und nicht nur bei einem zuvor festgelegten Endausschlag.

Vorteilhafte Ausführungsformen des Stellantriebes nach der Erfindung sind durch die Merkmale der Ansprüche 2 bis 9 umschrieben.

Ausführungsbeispiele der Erfindung werden nachfolgend anhand der Zeichnungen näher erläutert. Es zeigen:

Fig. 1 einen Stellantrieb an einem Ventil teilweise aufgebrochen im Schnitt in schematischer Darstellung;

Fig. 2 einen Stellantrieb an einem Mischhahn im Schnitt in schematischer Darstellung;

Fig. 3 eine andere Ausführungsform eines Stellantriebes an einem Mischhahn im Schnitt in schematischer Darstellung teilweise aufgebrochen; und

Fig. 4 einen Schnitt entlang der Linie IV–IV von Fig. 3.

Der Stellantrieb besitzt an einer Antriebskonsole oder -platte 1 als Antriebselement einen elektrischen Motor 2, der ein Zwischengetriebe 3 mit einem Motorzahnrad 4 und einem Übertragungszahnrad 5 antreibt. Mit dem Übertragungszahnrad 5 steht ein Antriebszahnrad 6 in Eingriff, koaxial mit dessen Drehachse A ist eine Antriebsspindel 7 angeordnet, die als Gewindespindel ausgebildet ist und ein Aussengewinde 8 aufweist, welches in ein entsprechendes Innengewinde des Antriebszahnrads 6 eingreift. Wenn das Antriebszahnrad 6 sich dreht, wird die Antriebsspindel durch die Gewinde 8 und 9 je nach Drehrichtung des Antriebszahnrades 6, aufwärts- bzw. abwärts bewegt und führt die Hubbewegung B aus. Der Motor 2 ist stationär auf der Antriebskonsole 1 befestigt und befindet sich in einem durch einen Deckel 10 abgeschlossenen Gehäuseraum 11. Die Antriebskonsole 1 besitzt eine Öffnung 12, welche das Motorzahnrad 4 teilweise aufnimmt. Das Übertragungszahnrad 5 ragt mit einem längeren Teil 5a durch eine entsprechend ausgebildete Öffnung einer Getriebeplatte 13 hindurch. Das Zwischengetriebe 3 und auch das Antriebszahnrad 6 können in irgendeiner bekannten Weise drehbar gelagert sein (nicht gezeigt). Der Motor 2 ist durch nicht dargestellte Leistungen z.B. an eine elektrische Stromquelle anschliessbar.

Das Antriebszahnrad 6 ist in Richtung der Drehachse A, die gleichzeitig die Längsachse der Antriebsspindel 7 ist, beweglich, d.h. beidseitig federnd gelagert und dazu einerseits an der Getriebeplatte 13 mittels O-Ringen 14 und an einer Zwischen platte 16 mittels O-Ringen 15 federnd abgestützt. Damit das Antriebszahnrad 6 auch bei einer axialen Verschiebung im Eingriff mit dem Übertragungszahnrad 5 verbleibt, ist der längere Teil 5a des Übertragungszahnrades 5 mit einer entsprechenden Länge ausgebildet. Die Antriebsspindel 7 kann sich daher bei einer in Achsrichtung A angreifenden Kraft in axialer Richtung verschieben. Die O-Ringe 14 und 15 sind vorzugsweise nur leicht vorgespannt, so dass das Antriebszahnrad 6 nur leicht zwischen der Getriebeplatte 13 und der Zwischenplatte 16 eingespannt ist. Dabei lassen die O-Ringe 14 und 15 eine ihrer Federkraft entsprechende Hubbewegung des Antriebszahnrades 6 in Richtung von Doppelpfeil B zu. Die O-Ringe 14 und 15 sind in Ausnehmungen 14a und 15a untergebracht.

Die Zwischenplatte 16 besitzt eine zentrale Öffnung 17 durch welche die Antriebsspindel 7 hindurchragt, die einen Führungsansatz 18 aufweist, der als Sechskant ausgebildet ist. Der Führungsansatz 18 ist in einer entsprechenden Ausnehmung eines inneren Zahnrades 20 axial verschiebbar geführt. An den Führungsansatz 18 schliesst sich ein Kupplungsteil 21 an, der Kugeln 22 aufweist. Die Kugeln 22 stützen sich axial an den Wänden des Kupplungsteils 21 und radial nach aussen ab an einem Entkupplungsring 24. Radial nach innen liegen sie an einem Ansatz 23 an, der in den Kupplungsteil 21 einführbar ist. Der Kupplungsteil 21 besitzt an seiner Aussenseite den axial verschiebbaren Entkupplungsring 24 mit Ausnehmungen 25. Der Ansatz 23 weist dagegen eine ringförmige Ausnehmung 26 auf, in welcher die Kugeln 22 innen gelagert sind. Der Ansatz 23 befindet sich am Ende einer Ventilstange 27, die als Arbeitsteil eines Ventils 28 vorliegt. Am Ende der Ventilstange 22 befindet sich ein Ventilkegel 29, der je nach Hubbewegung B entweder an einem Ventilsitz 30 oder einem Ventilsitz 31 das Ventil 28 verschliessen kann.

Durch Verschieben des Kupplungsringes 24 des Kupplungsteils 21 in der Zeichnung gesehen nach oben können die Kugeln 22 in die Ausnehmungen 25 gelangen, so dass der Ansatz 23 aus dem Kupplungsteil 21 gelöst werden kann. Auf diese Weise lässt sich der gesamte Stellantrieb 32 vom Ventil lösen.

An die Zwischenplatte 16 schliesst sich aussen ein äusserer Stellring 33 an, der mit einer Innenverzahnung 34 mit einem Zwischenzahnrad 35 in Eingriff steht, das wiederum in das innere Zahnrad 20 eingreift. Der Stellring 33 dient zur manuellen Betätigung der Antriebsspindel 7.

Am Antriebszahnrad 6 greift ein Betätigungsglied 36 in Form einer Betätigungsstange an, die sich bei axialer Verschiebung des Antriebszahnrades 6 ebenfalls in axialer Richtung A verschieben kann. Mit einem Ansatz 37 sitzt die Stange 36 auf dem Antriebszahnrad 6 auf und erstreckt sich durch entsprechende Öffnungen in der Getriebeplatte 13 und der Antriebskonsole 1 in den Gehäuseraum 11 hinein. Eine an der Antriebskonsole 1 abgestützte Feder drückt den Ansatz 37 gegen das Antriebszahnrad 6. Die Stange 36 besitzt zwei Kontaktbetätigungsarme 39, die bei Verschiebung der Stange 36 in Hubrichtung B Kontakte 40 bzw. 41 eines Schalters 42 betätigen. Der Schalter 42 ist durch nichtdargestellte Verbindungen mit dem Motor 2 verbunden und kann denselben abschalten.

Vorzugsweise sind die Antriebsspindel 7, der Führungsansatz 18 und der Kupplungsteil 21 aus einem Stück ausgebildet. Durch Ausbildung von Seitenwänden 43 bzw. 44 an der Getriebeplatte 13 bzw. der Zwischenplatte 16 und durch kompakte Anordnung der anderen zuvor geschilderten Teile, insbesondere des Stellringes 33 sowie eines Gehäuseteils 45 zur Aufnahme des inneren Zahnrades 20 und des Kupplungsteils 21 sowie durch den Deckel 10 kann der Stellantrieb 32 in kompakter Form und abgeschlossen ausgebildet werden. Durch eine Öffnung 46 im Gehäuseteil 45 ist der Kupplungsteil zum Einkuppeln eines Arbeitsteiles zugänglich. Damit kann der Stellantrieb 32 als ein abgeschlossenes Gehäuse oder Bauteil in einfacher Weise rasch auf die Ventilstange 27 des Ventils 28 aufgesetzt und von dieser wieder abgenommen werden. Damit ist ein Ersatz des Stellantriebes bei einem Defekt auf einfache Weise und schnell möglich.

Der Stellantrieb arbeitet wie folgt: Bei der durch ein Signal am Motor 2 ausgelösten Hubbewegung B in der einen oder der anderen Richtung werden infolge Drehung des Zwischengetriebes 3 sowohl die Antriebsspindel 7 als auch die Ventilstange 27 aufwärts- bzw. abwärts bewegt. Dabei wird die Hubbewegung B im wesentlichen ohne Kompression der O-Ringe 14, 15 unmittelbar auf den Kupplungsteil 21 und damit auf die Ventilstange 27 übertragen. Erst bei einem z.B. im Ventil 28 auftretenden Widerstand oder Druck, z.B. bei einem Aufsitzen des Ventilkegels am Ventilsitz 30 oder 31, wird ein Gegendruck über die Ventilstange 27, den Kupplungsteil 21 und die Antriebsspindel 7 auf das Antriebszahnrad 6 ausgeübt, das durch den weiterlaufenden Motor 2 weiterhin in Drehung versetzt ist. Das Antriebszahnrad 6 kann sich daher entweder gegen die Kraft des O-Ringes 14 oder gegen die Kraft des O-Ringes 15 noch ein kurzes Wegstück in Hubrichtung B weiter bewegen, bis die ebenfalls in der gleichen Richtung bewegte Betätigungsstange 36 einen der Kontakte 40 oder 41 des Schalters 42 betätigt. Dann schaltet der entsprechende Kontakt den Motor 2 ab. Auf diese Weise wird der Gegendruck durch die O-Ringe 14 bzw. 15 abgefangen und eine Überbeanspruchung der empfindlichen Teile des Stellanantriebes 32 bzw. des Ventils 28 wird dadurch vermieden. Auch ein Nachlaufen des Motors 2 nach Abschalten durch einen der Kontakte 40 oder 41 kann dabei keine Überlastkraft z.B. Am Ventilsitz 30 oder 31 oder am Zwischengetriebe 3 erzeugen, weil eine solche durch die O-Ringe 14 bzw. 15 ebengalls abgefangen wird.

Die Vorspannung, d.h. die Kraft gegenüber den O-Ringen 14, 15 entspricht dem Schliessdruck des Ventils. Die Höhe der Ausnehmungen 14a, 15a in Hubrichtung B wird dabei kleiner als der Schaltweg zwischen den Kontakten gewählt, so dass auch bei Nachlaufen des Motors die O-Ringe 14, 15 stets noch genügend weiter zusammengedrückt werden können. Die Verschiebung des Antriebszahnrades 6 kann z.B. 1 mm betragen. Die Kontakte 40, 41 haben vorzugsweise einen solchen Abstand C voneinander, dass sich die Betätigungsstange 36 der jeweiligen Federkraft der O-Ringe 14 bzw. 15 entgegen, z.B. ungefähr 1 bis 2 mm, weiter auf- bzw. abwärtsbewegen kann. Für das Antriebszahnrad 6 kann ein Untersetzungsverhältnis von 77:16 gewählt werden, was eine Drehzahl von 3,24 Umdrehungen/min ergibt. Mittels der Gewindesteigung an der Antriebsspindel 7 bzw. des Innengewindes 9 kann der Hubweg pro Minute entsprechend gewählt werden. Die Grösse des Hubes in Millimeter/min ist von der Drehzahl des Motors, der Getriebeübersetzung und von der Steigung der Gewinde 8 und 9 abhängig.

Bei elektrisch abgeschaltetem Motor 2 kann die Einstellung mittels des Stellringes 33 von Hand vorgenommen werden. Beim Wechsel von Handbetrieb auf Motorbetrieb braucht die Handeinstellung nicht rückgängig gemacht zu werden, da der Motor vom Getriebe nicht abgekuppelt worden ist. Die Handeinstellung mittels des Einstellringes 33 kann im Uhrzeigersinn und auch im Gegenuhrzeigersinn erfolgen. Das Kugellager des Kupplungsteiles 21 mit den Kugeln 22 dient bei Handeinstellung dazu, die mit der letzteren erzeugte Drehbewegung aufzuheben.

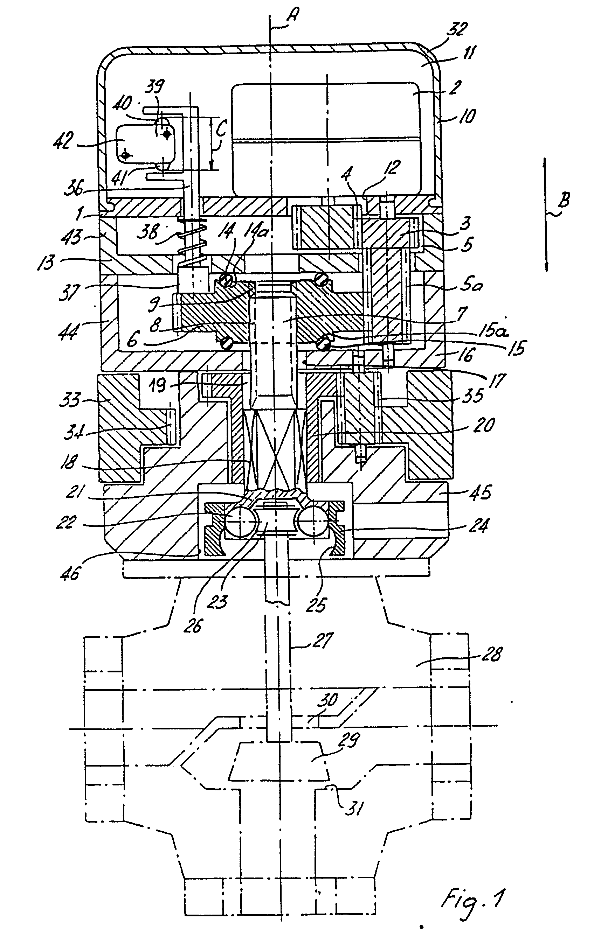

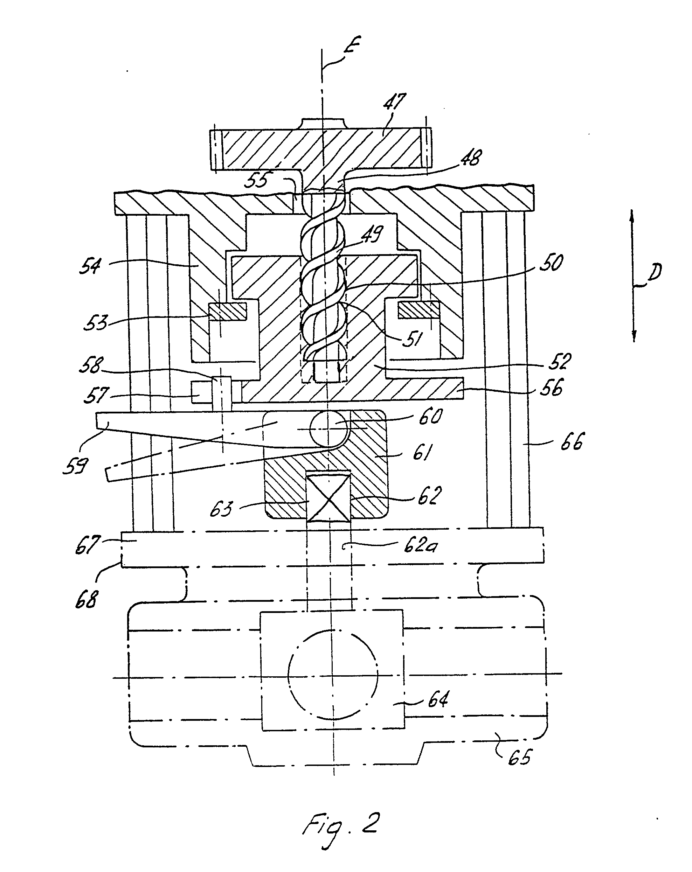

Bei der Ausführungsform nach Fig. 2 liegt wiederum ein Antriebszahnrad 47 vor, das vorzugsweise in gleicher Weise wie das Antriebszahnrad 6 bei der Ausführungsform nach Fig. 1 mit der dortigen Antriebseinrichtung und Schafteinrichtung ausgerüstet ist. Auf diese Weise ist das Antriebszahnrad 47 dann in gleicher Weise wie bei der Ausführungsform nach Fig. 1 durch federnde O-Ringe beidseitig federnd gelagert, wie es bereits dort beschrieben wurde. Das Antriebszahnrad 47 ist mit einer Antriebsspindel 48 fest verbunden und kann mit derselben aus einem Stück bestehen. Die Antriebsspindel 48 ist als Gewindewelle ausgebildet und besitzt ein äusseres doppelgängiges Gewinde 49, mit welchem sie in eine mit einem entsprechenden Gegengewinde 50 ausgerüsteten Bohrung 51 eines als Kupplungsscheibe 52 ausgebildeten Kupplungsteiles soweit eingeschraubt ist, dass sie sich in dem letzten noch auf- und abwärtsschrauben kann. Die Kupplungsscheibe 52 ist auf einer ringförmigen Deckscheibe 53 in einem Gehäuseteil 54 drehbar gelagert und wird von der Antriebsspindel 48 bei Drehung des Antriebszahnrades 47 um die Drehachse E in Drehung versetzt. Die Antriebsspindel 48 erstreckt sich in das Gehäuseteil durch eine Öffnung 55. Im unteren Teil 56 der Kupplungsscheibe 52 befindet sich ein radialer Schlitz 57, in welchen ein Zapfen 58 hineinragt. Der Zapfen 58 befindet sich auf einem Kupplungshebel 59, der mittels eines Gelenkes 60 an einer Nabe 61 angebracht ist, die ebenfalls um die Drehachse E drehbar ist. Mit einer prismatischen Ausnehmung 62 ist die Nabe 61 auf dem Ende eines Wellenstummels 62a angeordnet, der mit einem entsprechenden Gegenprofil 63 versehen ist. Der Wellenstummel 62a gehört als Arbeitsteil zu einem Mischsegment 64 eines Mischhahns 65. Der Gehäuseteil 54 ist mittels Stützen 66 mit einer unteren Gehäuseplatte 67 verbunden, die vom Mischhahn 65 abnehmbar ist. Zusammen mit den wie vorstehend bereits erwähnten Teilen der Ausführungsform nach Fig. 1 am Antriebszahnrad 47 ist damit ein Stellantrieb 68 geschaffen, der auf den Mischhahn 65 aufsteckbar bzw. von demselben abnehmbar ist, was durch einfaches Aufstecken bzw. Abziehen vom Wellenstummel mittels des Profils 63 erfolgen kann.

Der Stellantrieb nach Fig. 2 arbeitet wie folgt:

Bei Drehung des Antriebszahnrades 47 drehen auch die Antriebsspindel 48 und die Kupplungsscheibe 52. Dadurch wird der Zapfen 58 im Schlitz 57 mitgenommen und es wird dadurch die Nabe 61 in Drehung versetzt. Dadurch wird das Mischsegment 64 in Drehung versetzt und kann der Mischhahn entsprechend schliessen oder öffnen.

Die Steigung der Gewinde 49, 50 ist so gewählt, dass die Antriebskraft bei Normalbetrieb nicht ausreicht, die Antriebsspindel 48 relativ zur Kupplungsscheibe 52 zu verstellen, sodass keine Hubbewegung am Antriebszahnrad 47 erfolgt. Bei Auftreten eines Widerstandes beispielsweise bei Erreichen einer Endstellung des Mischsegmentes 64 wird eine Relativbewegung zwischen Antriebsspindel 48 und Kupplungsteil 52 ausgelöst und es wird eine Kraft und eine Bewegung in axialer Richtung E bzw. gemäss Pfeil D auf das Antriebszahnrad 47 übertragen, das wiederum infolge seiner obenbeschriebenen gefederten Lagerung diesem Druck unter einem kleinen Hub in Richtung von Pfeil D ausweichen kann. Dadurch können, wie vorstehend bei Ausführungsform nach Fig. 1 beschrieben, die Kontakte 40, 41 betätigt werden, wodurch der Motor 2 abgeschaltet wird.

Zum Auskuppeln wird der Kupplungshebel 59 in die in Fig. 2 gestrichelte Lage gerückt, wodurch der Zapfen 58 aus dem Schlitz 57 ausrückt. Das Einkuppeln geschieht in der umgekehrten Weise.

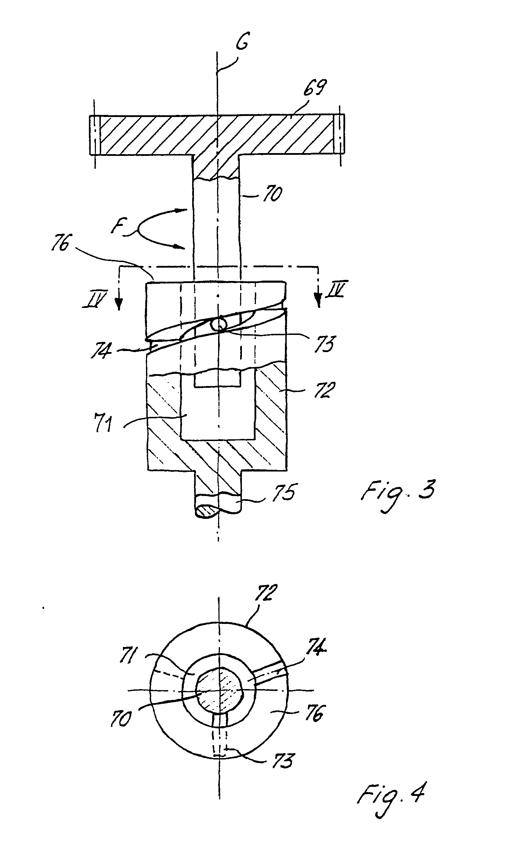

Bei der Ausführungsform nach Fig. 3 und 4 handelt es sich wiederum um einen Stellantrieb für einen Mischhahn (nicht gezeigt). Es liegt wiederum ein Antriebszahnrad 69 vor, das vorzugsweise wie das Antriebszahnrad 47 der Ausführungsform nach Fig. 2 ausgebildet und in gleicher Weise wie bei der Ausführungsform nach Fig. 1 mit den dortigen Antriebseinrichtungen und der Kontakteinrichtung ausgerüstet ist. Eine Antriebsspindel 70 ist in Form einer Abtriebswelle wiederum mit dem Antriebszahnrad 69 fest verbunden und kann von diesem um die gemeinsame Drehachse G in Richtung von Doppelpfeil F in Drehung versetzt werden. Die Antriebsspindel 70 erstreckt sich nach unten in eine zentrale Bohrung 71 eines Kupplungsteils 72, der ebenfalls drehbar gelagert ist (nicht gezeigt). Von der Antriebsspindel 70 weg erstreckt sich quer zur Achsrichtung G ein Bolzen oder Zapfen 73 in einen Schlitz 74 in der Vertikalwand des Kupplungsteils 72 und ist in demselben geführt. Im Kupplungsteil 72 ist eine Ventilstange 75 eines Drehschieberventils oder Mischers angeordnet, die z.B. wie bei der Ausführungsform nach Fig. 2 im Kupplungsteil 72 lösbar befestigt sein kann. Zum Einsetzen des Zapfens 73 erstreckt sich der Schlitz 74 bis in die Stirnseite 76 des Kupplungsteiles 72.

Der Stellantrieb arbeitet wie folgt:

Bei Drehung des Antriebszahnrades 69 und damit der Antriebsspindel 70 wird der Kupplungsteil 72 durch die Bolzenverbindung in Drehung versetzt und der Mischhahn kann entsprechend geschlossen oder geöffnet werden. Erfolgt am Mischhahn ein Anschlag, z.B. des Mischsegmentes, so wird analog dem Ausführungsbeispiel der Fig. 2 ein Gegendruck erzeugt, der sich über den Kupplungsteil 72 und die Wände des Führungsschlitzes 74 auf den Bolzen 73 überträgt und diesen infolge der Relativbewegung zwischen Bolzen 73 und Kupplungsteil 72 in axialer Richtung treibt. Dadurch erfolgt auf die Antriebsspindel 70 und somit auch auf das Antriebszahnrad 69 ein Druck, durch welchen das Antriebszahnrad 69 axial gegen den Druck der O-Ringe 14, 15 (Fig. 1) verschoben wird und es findet ein axialer Hub nach der einen oder anderen Richtung statt, je nachdem, wie der Anschlag im Mischhahn erfolgte. Durch den Führungsbolzen 73 im Führungsschlitz 74 kann also aufgrund der gewählten Steigung trotz der Drehbewegung der Antriebsspindel 70 und des Antriebszahnrades 69 dennoch eine Hubbewegung am Antriebszahnrad 69 erzeugt werden. Der Motor kann daher in gleicher Weise, wie bei den Ausführungsformen nach Fig. 1 und 2 beschrieben, abgeschaltet werden.

## Patentansprüche

1. Stellantrieb für Absperr- und Regulierarmaturen, insbesondere Ventile und Hähne, mit einem Antriebsmotot (2), der über ein Getriebe (3, 4, 5, 6, 47, 69) mit einer Antriebsspindel (7, 48, 70) verbunden ist und mit einer Überlastsicherung gegen unerwünschte Krafteinwirkungen auf die Antriebsspindel, wobei ein koaxial mit der Antriebsspindel angeordnetes Antriebszahnrad (6, 47, 69) beidseits über je mindestens ein Federelement (14, 15) axial verschiebbar an Gehäuseteilen (13, 16) abgestützt ist und wobei eine Schaltvorrichtung für den Antriebsmotor einen am Gehäuse angeordneten Schalter (42) aufweist, der über ein Betätigungsglied (36) mit dem Antriebszahnrad (6, 47, 69) verbunden ist, dadurch gekennzeichnet, dass die Federelemente als O-Ringe (14, 15) ausgebildet sind und das Betätigungsglied (36) die Axialbewegung des Antriebszahnrades (6, 47, 69) ohne irgendwelche Zwischenschaltung von anderen Elementen an den Schalter (42) überträgt.

2. Stellantrieb nach Anspruch 1, dadurch gekennzeichnet, dass die Antriebsspindel (7) einen Kupplungsteil (21) zum Anschluss eines Arbeitsteiles aufweist.

3. Stellantrieb nach Anspruch 2, dadurch gekennzeichnet, dass der Kupplungsteil (21) ein Kugellager sowie einen axial verschiebbaren Entkupplungsteil (24) mit Ausnehmungen (25) zur Aufnahme von Kugeln (22) in entkuppelter Stellung besitzt.

4. Stellantrieb nach einem der Ansprüche 1 bis 3, dadurch gekennzeichnet, dass die Antriebsspindel (7) als eine Gewindestange ausgebildet ist, die mit ihrem Aussengewinde (8) in ein Innengewinde (9) des Antriebszahnrades (6) eingreift und axial bewegbar ist.

5. Stellantrieb nach einem der Ansprüche 1 bis 4, dadurch gekennzeichnet, dass es zur Handeinstellung des Stellweges (B, D) ein äusseres Stellelement (33) aufweist, das mit einem inneren Zahnrad (20) verbunden ist, in welchem die Antriebsspindel (7) mittels eines Führungsteiles (18) axial verschiebbar und drehfest geführt ist.

6. Stellantrieb nach Anspruch 5, dadurch gekennzeichnet, dass das äussere Stellelement (33) ein Stellring ist, der über ein Zwischenzahnrad (35) mit dem inneren Zahnrad (20) verbunden ist.

7. Stellantrieb nach einem der Ansprüche 1 bis 3, dadurch gekennzeichnet, dass die Antriebsspindel (48) ein Gewinde (49) aufweist und in einen mit einem entsprechenden Gegengewinde (50) ausgerüsteten Kupplungsteil (52) eingeschraubt ist, der um seine Längsachse (E) drehbar in einem Gehäuseteil (54) gelagert ist und einen radialen Schlitz (57) aufweist, in welchen ein Zapfen (58) hineinragt, der mit einer drehbar angeordneten Nabe (61) verbunden ist, welche zur Aufnahme des Arbeitsteils eingerichtet ist.

8. Stellantrieb nach Anspruch 7, dadurch gekennzeichnet, dass der Zapfen (58) auf einem Kupplungshebel (59) sitzt, der schwenkbar an der Nabe (61) angebracht ist, um den Zapfen (58) in oder ausser Eingriff mit dem Schlitz (57) zu bringen.

9. Stellantrieb nach einem der Ansprüche 1 bis 3, dadurch gekennzeichnet, dass die Antriebsspindel (70) als eine Drehwelle vom Antriebszahnrad (69) drehbar antreibbar ist und sich in eine Bohrung (71) eines drehbar gelagerten Kupplungsteils (72) erstreckt und einen radialen Zapfen (73) besitzt, der in einen gegenüber der Längsachse (G) der Antriebsspindel (70) geneigt verlaufenden Schlitz (74) des Kupplungsteiles (72) hineinragt, wobei der Kupplungsteil (72) zur Aufnahme des Arbeitsteiles eingerichtet ist.

## Revendications

1. Dispositif de positionnement pour clapets de fermeture et de régulation et pour vannes et robinets en particulier, avec moteur de commande (2) relié par un réducteur (3, 4, 5, 6, 47, 69) à un arbre de commande (7, 48, 70) et par une sécurité de surcharge contre les effets indésirables des forces sur l'arbre de commande, de telle sorte qu'un engrenage de commande (6, 47, 69) monté co-axialement à l'arbre de commande est supporté des deux côtés, par au moins un élément élastique (14, 15) déplaçable axialement sur les éléments de boîtier (13, 16), et où un dispositif de commutation pour moteur de commande comporte un interrupteur (42) monté sur le boîtier qui est relié, par l'intermédiaire d'un élément de manœuvre (36) à l'engrenage de commande (6, 47, 69), caractérisé en ce que les éléments élastiques sont réalisés sous la forme de joints toriques (14, 15) et que l'élément de manœuvre (36) transmet le mouvement axial de l'engrenage de commande (6, 47, 69) à l'interrupteur (42), sans l'incorporation d'aucun autre élément quelconque.

2. Dispositif de positionnement selon la revendication 1, caractérisé en ce que l'arbre d'entraînement (7) comporte un élément d'accouplement (21) pour le raccordement d'un organe d'actionnement.

3. Dispositif de positionnement selon la revendication 2, caractérisé en ce que l'élément d'accouplement (21) comporte un roulement à billes ainsi qu'un organe de débrayage (24) mobile axialement, muni d'évidements (25) pour recevoir les billes (22) en position débrayée.

4. Dispositif de positionnement selon l'une quelconque des revendications 1 à 3, caractérisé en ce que l'arbre d'entraînement (7) est réalisé sous forme d'une tige filetée dont le filetage extérieur (8) vient s'engager sur le filetage intérieur (9) d'un engrenage de commande (6) et est mobile axialement.

5. Dispositif de positionnement selon l'une quelconque des revendications 1 à 4, caractérisé en ce qu'il comporte un élément de réglage extérieur (33) pour le réglage manuel de la course de régulation (B, D) relié à un engrenage à denture intérieure (20), dans lequel l'arbre de commande (7) est guidé de façon fixe en rotation et mobile axialement par l'intermédiaire d'un organe de guidage (18).

6. Dispositif de positionnement selon la revendication 5, caractérisé en ce que l'élément de réglage extérieur (33) est une bague de butée, reliée par l'intermédiaire d'un engrenage intermédiaire (35) à un engrenage à denture intérieure (20).

7. Dispositif de positionnement selon l'une quelconque des revendications 1 à 3, caractérisé en ce que l'arbre de commande (48) comporte un filetage (49) et est vissé dans un élément d'accouplement (52) muni d'un contre-filetage correspondant (50), supporté en rotation sur son axe longitudinal (E) dans un élément de boîtier (54) et qui comporte une fente radiale (57) dans laquelle un tourillon (58) fait saillie à l'intérieur, relié à un moyeu (61) à montage rotatif, prévu pour recevoir l'organe d'actionnement.

8. Dispositif de positionnement selon la revendication 7, caractérisé en ce que le tourillon (58) porte sur un levier d'accouplement (59) monté de façon oscillante sur le moyeu (61) afin d'amener le tourillon (58) en engagement dans la fente (57) ou hors de celle-ci.

9. Dispositif de positionnement selon l'une quelconque des revendications 1 à 3, caractérisé en ce que l'arbre de commande (70) peut être entraîné en rotation par l'engrenage de commande (69) comme un arbre tournant et se prolonge dans un orifice (71) d'un élément d'accouplement (72) supporté en rotation et comporte un tourillon radial (73) qui fait saillie dans une fente (74) de l'élément d'accouplement (72), disposée angulairement par rapport à l'axe longitudinal (G) de l'arbre de commande (70), de telle sorte que l'élément d'accouplement (72) est aménagé pour recevoir l'organe d'actionnement.

**Claims**

1. A positioning device for closing and regulating armatures, especially valves and cocks, with a drive motor (2) which is connected with a drive spindle (7, 48, 70) through a drive mechanism (3, 4, 5, 6, 47, 69) and having an overload safety device against unwanted forces on the drive spindle, having a drive gear (6, 47, 69) arranged coaxial with the drive spindle and being supported on both sides by at least one spring element (14, 15) for axial sliding movement relative to housing parts (13, 16) and having a switch device for the drive motor, the switching device including a switch (42) arranged in the housing and which switch is connected with the drive gear (6, 47, 69) through an operating member (36), characterized in that the spring elements are formed as Orings (14, 15) and in that the operating member (36) conveys the axial movement of the drive gear (6, 47, 69) without further transmission elements to the switch (42).

2. A positioning device according to claim 1, characterized in that the drive spindle (7) has a coupling part (21) for connection to an operating part.

3. A positioning device according to claim 2, characterized in that said coupling part (21) includes a ball bearing unit as well as an axially movable decoupling part (24) with recesses (25) for receiving the balls (22) of said bearing unit in the decoupled position of the decoupling part.

4. A positioning device according to one of the claims 1 to 3, characterized in that said drive spindle (7) is formed with a threaded stem having an external thread (8) which engages with an internal thread (9) of the drive gear (6) and which stem is axially movable.

5. A positioning device according to one of the claims 1 to 4, characterized by an external adjustment element (33) for hand adjustment of the regulating distance (B, D), said external adjustment element being drivingly connected with an internal gear (20) in which said driving spindle (7) is supported by a guide portion (18) for nonrotating but axially movable movement.

6. A positioning device according to claim 5, characterized in that said external adjustment element (33) is an adjustment ring which is drivingly connected with said internal gear (20) through an intermediate gear (35).

7. A positioning device according to one of the claims 1 to 3, characterized in said drive spindle (48) having a thread (49) threaded into said coupling part (52), said coupling part (52) being equipped with a corresponding complementary thread (50) for receiving said drive spindle thread, which coupling part (52) is supported for rotation about its longitudinal axis (E) relative to a housing part (54) and has a radial slot (57) into which a pin (58) is introduceable, which pin is connected with a rotably arranged hub (61) adapted to receive said operating part.

8. A positioning device according to claim 7, characterized in that said pin (58) is locating on a coupling lever (59) pivotally moveably attached to the hub (61) so that the pin (58) may be brought into and out of engagement with said slot (57) in the coupling part.

9. A positioning device according to one of the claims 1 to 3, characterized in that the drive spin-

dle (70) is rotatably drivable as a rotary shaft from the drive gear (69) and extends into a bore (71) of a rotatably supported coupling part (72) and has a radial pin (73) which pin extends into a slot (74) of the coupling part (72) inclined with respect to the longitudinal axis (G) of the drive spindle (70), the coupling part (72) being adapted for receiving the operating part.

Fig.1

Fig. 2

3/3

Fig. 3

Fig. 4